# EUROPEAN PATENT APPLICATION

(11) **EP 4 312 336 A1**
(43) Date of publication of application: **31.01.2024**
(21) Application number: 22187773.1
(22) Date of filing: 29.07.2022
(51) Int. Cl.: H02J 7/00, H02J 15/00

(54) **BATTERY STORAGE SYSTEM WITH STOCHASTIC BALANCING**

(71) Applicant: STABL Energy GmbH, 81379 München (DE)
(72) Inventor: Singer, Arthur, 80687 München (DE); Lohr, Georg, 82223 Eichenau (DE)
(74) Representative: Lohr, Jöstingmeier & Partner

(57) **Abstract**

A battery storage system comprises at least one string of battery modules. Within the at least one string the battery modules are connected in series. Over multiple periods of time different combinations of battery modules are in a connected state with batteries connected while the remaining battery modules such that battery modules with a higher selection value have longer times in a connected state than battery modules with a lower selection value. The selection value of the at least one of the battery modules is a random value combined with an availability value of the battery module.

## Description

### Field of the invention

The invention relates to a battery storage system with stochastic or random balancing of batteries and a method of operating a battery storage system. It further relates to an improved multilevel converter with stochastic or random balancing of batteries.

### Description of the related art

US 2014/0049230 A1 discloses a multilevel converter topology for generating AC signals by switching multiple batteries. There is no balancing provided for individual batteries.

EP 3 593 435 B1 discloses a Multilevel converter requiring batteries of different types. The activation times of individual batteries are adapted based on a state of charge or state of health of a battery.

EP 3 373 407 B1 discloses a Multilevel converter where the activation times of individual batteries are adapted based on a state of health of a battery. As the state of health changes slowly over time, this cannot avoid unbalancing within some charge/discharge cycles.

### Summary of the invention

The problem to be solved by the invention is to provide battery storage systems which provides an improved balancing and an improved load distribution between different batteries of a battery system.

Solutions of the problem are described in the independent claims. The dependent claims relate to further improvements of the invention.

In an embodiment, a battery storage system includes a plurality of battery modules which are connected together. The battery storage system may be configured for delivering a DC voltage to a load. It may also be configured for delivering an AC voltage by approximating a sinusoidal or any other waveform by switching varying numbers of battery modules together.

Each battery module includes a battery and at least a switch which is configured, when closed, to connect a module's battery in series with other batteries and/or modules, called a connected state. The at least one switch, which may be a series switch, may also be configured to isolate the battery from other batteries and/or modules when open. There may be at least one parallel switch at the battery module for bypassing the battery module when closed. This state is called a bypass state. If these switches are open, the battery module is in an open state. There may be a higher number of switches, which may provide further switching states, e.g., reversing a polarity of the battery or parallel connection of batteries. Basically connected, bypass and open states may be obtained with such a higher number of switches. For simplicity, herein only one switch of each type is referred to.

A battery module may have an availability value. Such an availability value may be an indication of the deliverable power of a battery or a battery module, which may include at least one of a state of charge, a maximum current capacity, a voltage, a temperature, a state of health or a combination thereof.

A battery may include one or more battery cells. For high power applications groups of battery cells may be connected in series (e.g., hard-wired) in order to have a higher voltage. Further, battery cells may be connected in parallel to increase current capacity and/or storage capacity.

A string of batteries, herein referred as string, may include an integer number of N with N >=2 of battery modules which may be connected in series. A string may include an inductor and/or a diode to improve current distribution and/or to avoid unwanted currents flowing between strings. An inductor, which may be in series to at least one string, may improve current control of a string as the current may be controlled by pulse width modulation (PWM) switching between the connected and open states of at least one battery module and/or a string. The inductor may also include connecting cables of sufficient length, e.g., between battery modules and/or strings.

An integer number M with M >=1 of strings may be connected together by a parallel or series circuit. Individual strings may have individual integer numbers N1, N2, N3, ... of modules.

A string may be configured to provide balancing of its battery modules. For balancing the battery modules, over time, the battery modules in a string may be configured to different states, e.g., from connected state to bypass state or from bypass state to connected state, such that all batteries are discharged to a common availability value. Further, battery modules may be connected such, that they are charged while others are discharged.

The number N of battery modules within a string may be selected, such that the string may provide a higher output voltage than its nominal peak output voltage. In other words, there may be a higher number of battery modules than required for the nominal peak output voltage. Therefore, normally, not all battery modules are required to provide a nominal peak output voltage and not all battery modules are in a connected state for such an output voltage. The remaining battery modules are in a bypass state and do not deliver power, such that only the batteries of the connected battery modules will be discharged e.g. when the battery storage system transfers energy into the load or grid, while the batteries of the modules in bypass state keep their charge.

The battery storage system may be configured for selection based on a selection value, within at least one string e.g. over multiple time intervals different combinations of battery modules for a connected state while the remaining battery modules are in a bypass state. During discharging of the battery storage system, at least one of the modules with a higher selection value have longer times in a connected state than at least one of the battery modules with a lower selection value or vice versa.

The selection value of the at least one of the battery modules may be a random value combined with an availability value of the at least one of the battery modules. The selection value may include the random value multiplied with an availability value representing the availability of the at least one of the battery modules. The values may also be added. Using such random values gives immediately a better load distribution between battery modules, specifically, if there are multiple battery modules with similar availability values. Normally, with battery modules having similar availability values, the availability values of the batteries change slowly over time, which may result in comparatively long on-times or off-times of batteries, such that the batteries may develop different internal temperatures long before a change in availability value is detected. Using random values provides a comparatively even distribution of battery module loading and temperature. Further EMI (electromagnetic interference) characteristics may be improved, as changing switching patterns result in broadening of the RF (radiofrequency) spectrum. Basically, the RF spectrum is convoluted with a noise defined by the random numbers.

The availability value of the at least one of the battery modules and/or the random value are updated in time intervals larger than one or multiple intervals of a string voltage. In case of an AC input/output voltage such an interval of a string voltage may be a period of an AC voltage. In case of an DC input/output voltage there may be switching between batteries and/or strings in certain intervals.

Basically, the same applies if the battery modules of a string are charged. Here, the states of the battery modules may be exchanged from time to time such that all battery modules have a similar or the same availability value. Battery modules with a lower selection value may have longer times in a connected state than battery modules with a higher selection value. Here also random values may be applied.

The selection value may be calculated in predetermined or random time intervals. It may also be computed for one or any number of power cycles like sine wave periods of an output of the battery storage system. Random time intervals may result in an improved power distribution.

Further, a balancing between strings may be provided. This is similar to the balancing between battery modules within a string, but on a higher level of strings. A string may be configured to be in a connected state or in an open state. An open state may be a state, where at least one of the battery modules is in an open state, such that no current may flow through a string. The distribution of open and connected states between strings may be controlled such that all strings have a similar or the same availability value of their battery modules.

Strings may be balanced based on string selection values, such that a string with a higher string selection value may have longer connected state intervals compared a string with a lower string selection value. Further, strings with a higher string selection value may be configured to deliver a higher current compared to strings with a lower string selection value. The current may be controlled by pulse width modulation (PWM) with the connected and open states of a string in case the string includes an inductor. During charging, strings with a lower string selection value may have longer durations in a connected state compared to strings with a higher string selection value. Also, the charging current may be controlled by PWM based on the string selection value.

The string selection value of the at least one of the strings may be a random value combined with an availability value of the battery modules of the at least one string.

Any selection may be made by pulse width modulation (PWM). A selection may be triggered whenever a change in the number of connected battery modules and/or strings is required. It may further be triggered in fixed and/or random time intervals.

The balancing of strings and/or the balancing of battery modules within strings may be dependent of a random value and the availability value of battery modules and/or strings as described above. It may also be dependent of other parameters like an operating state, which may be a temperature. For example, battery modules with higher temperature may have longer bypass states or strings with higher temperatures may have longer open states compared to battery modules or strings with lower temperatures, such that these may cool down over time.

Further balancing may be based on a DoD (Depth of Discharge) value. When approaching a minimum charge value, the selection value or availability value may be significantly decreased, which may even be supported by a nonlinear e.g. exponential function, as the lifetime of batteries decreases significantly, when approaching or even falling below this minimum charge value. Accordingly, battery modules approaching the DoD limit may be used less than others, which are more above the DoD limit. This may be used to improve battery lifetime or even to artificially age batteries to adapt them to other batteries.

The balancing of battery modules and strings as disclosed herein may be considered as a proactive balancing as it either may move unbalanced strings or battery modules into a balanced state overtime or it may prevent strings or battery modules to become unbalanced as it may react on even very small imbalances. In general, SoC estimation bears a significant error which may be in the order of about +-5% and may vary over time. By using random components, a better charge distribution may be reached over time, compensating for such estimation errors.

This balancing can be performed under full load of battery modules and strings and does not require any idle times for balancing. Further, this type of balancing does not produce any balancing losses as resistive or dissipative balancing known from prior art does. Such a balancing increases reliability and availability. In a fully balanced state of the battery storage system all battery modules may have the same availability value if they are identical. With different battery modules, all battery modules may have a maximum achievable availability value which may be determined by the capability of each battery module and the total state of charge of the battery storage system. With balanced battery modules, it may be simple to replace a failed battery module by any other module.

The balancing disclosed herein works with combinations of different battery modules, e.g., having different battery sizes and/or types, as well as with different strings, e.g., having different capacity and/or different current rating.

The same applies to strings. Strings of different configuration and/or state of charge may be connected in parallel. The current flow between strings may be controlled be PWM. Further strings may be connected together based on their current and/or voltage rating. For example, a string with lower maximum voltage may be used for lower voltage levels of a sinewave output voltage, where another string with higher output voltage level may take over at higher current level. Further, a string with higher current rating may be switched on at higher voltage levels of a sinewave voltage with higher currents, whereas a switch with lower current rating may take lower voltage levels.

For controlling the modules, each module may include a module controller. The module controller may control the switches of the module. It may control the series switch in series with a battery and it may control the parallel switch e.g. connected between first and second module connectors of a module to provide a bypass state of a module. The module controller may further have measurement means for measuring operation conditions and detecting states of the components or of a battery module. Such states may be switching states of the series and/or parallel switch, temperatures, like battery temperature and/or switch temperatures. The battery module controller may further have means for determining an availability value of a battery or of a battery module. Such an availability value may be an indication of the deliverable power of a battery or a battery module, which may include at least one of a state of charge, a maximum current capacity, a voltage, a current, a temperature, a state of health or a combination thereof.

Such battery cells may individually or in groups be monitored by the module controller. The module controller may have a redundant configuration, for example including two module controllers working independently. Further, the module controller may be connected to a control bus to communicate with a master controller and/or further module controllers of other battery modules. The control bus may be redundant including two physical control bus structures or means of communication. The master controller may also be a redundant controller including two or more controllers. For example, two controllers may also be configured to communicate with master controllers by means of independent control bus systems. The module controllers may be configured to communicate with each other and to coordinate the control of the battery storage system. The module controllers and/or the master controller form a controller structure.

The master controller and the module controllers may be configured to continuously monitor modules. If a battery module fails, it may be set into a bypass state. If the module recovers, e.g., by cooling down, if it previously failed due to overheating, it may again be configured to participate in the multiplexing scheme.

In an embodiment, there may be different switch configurations in a battery module. There may be half-bridge circuits as described above, full-bridges (H-bridges), which may be configured to provide an AC output or any other known topology of a multi-level converter. There are topologies, which allow to invert battery module output voltages (e.g. H-bridge topologies) or which allow to connect individual battery modules in parallel (e.g. double H-bridge topologies with additional connectors at the battery module). This may further improve availability and reliability. The disadvantage is the higher number of switches, which are comparatively expensive and require space. The embodiments disclosed herein need a minimum of 2 switches and therefore can be built inexpensively and small.

In an embodiment, different batteries even within a string may be used. Due to the dynamic switching of batteries within the strings and switching between the strings, the voltage and/or capacity and/or state of charge of an individual battery of a battery module is not critical as long as the battery is able to provide the required current. This may allow to combine different types of batteries. Also, old batteries may be combined with new batteries or replaced batteries in a system. Therefore, if a single battery in a single battery module fails, only this battery module must be exchanged. It is not necessary to exchange the full string which would be necessary according to prior art, because normally, the batteries are matched together. Even if a battery in a string is not able to provide the nominal current for which the string is designed, the string may be operated with a lower current whereas the other strings may compensate this by a higher current. If the capacity of a string with a lower current rating is similar to the capacity of strings with higher current ratings, the on-times of the strings may be modified accordingly, such that a string with the lower current rating has a higher on-time compared to the strings with higher current ratings.

A battery module may include at least one battery and switches as further described herein. A battery module may further have a housing in which it may be fully encapsulated. This may allow to protect the components of a battery module from environmental influences. A battery module may further include a battery management system which may be connected to sensors for sensing temperatures like battery temperature and/or switch temperatures, pressures like housing pressures, battery pressures, environmental pressures, voltages and/or currents. A battery module may include a cooling device and/or means for conducting a cooling medium, e.g., a cooling fluid or gas. In an example, a battery module may have a voltage in a range between 24 to 60 V which may be based on eight to sixteen battery cells connected in series. There may further be multiple battery cells be connected in parallel to increase the current rating. Herein, for simplicity reference is made to a battery module also when referring to a state e.g., state of charge of a battery in a battery module. Battery modules may also have higher voltages or lower voltages.

A method relates to operating a battery storage system including at least one strings of battery modules wherein at least two of the battery modules may be connected in series within the at least one string. The battery storage system may also include any embodiment of a battery storage system disclosed herein.

In an embodiment, battery modules are selected randomly, e.g. by a random selector, and only the battery modules with the lowest availability value are excluded from power delivery. When charging, the batteries with the highest availability value are excluded from power delivery. In an example, there may be 12 battery modules in a string from which 10 are needed for generating the required output voltage. Then two batteries with the lowest availability values are deselected and excluded from the switching scheme. The remaining 10 batteries are randomly selected for power delivery. For charging two batteries with the highest availability values may be excluded. The random selection may be repeated before each half-wave, each period or multiple periods of an output voltage or charge voltage.

If, for example a sinusoidal output voltage is generated, the selected battery modules are discharged in a period of such a sine wave depending on the time or voltage level, they are switched on. Due to a random selection, each battery module has longer and shorter on periods, such that the load is evenly distributed over all battery modules. This also results in an even thermal distribution between the battery modules. If the availability value in this example of one of the selected 10 battery modules falls below an availability value of one of the 2 deselected modules, a deselected module will be selected and the selected module with the low availability value will be deselected. This results in a very good balancing of availability values between the battery modules.

In an example, for generating an AC voltage of a line frequency, e.g. of 60Hz, 50Hz or 16,6 Hz battery modules are periodically connected to form a sinusoidal output voltage. There may be selections or selection patterns, which may only be used once or for multiple periods of the output voltage. This system would work fine, if the selection of battery modules would be changed (e.g. updating of the selection value) every 1 to 100 seconds. In an embodiment, battery modules may be randomly selected from a group which meets the minimum power requirements. For example, if a sine wave out is generated, the battery modules for each voltage level of the sine wave have different on-times. Starting with the highest load, which is the lowest voltage level at a sine wave, for each voltage level a required power or energy may be calculated or estimated, e.g. by the formula (Int(U^{∗}i(t)dt)). An estimation may also be based on a previous cycle.

In an embodiment, battery modules are randomly grouped, where each group includes at least two battery modules. For each group a group availability value is determined. Such a group availability value may be the sum or the product of the availability values of the battery modules in the group. With these group availability values the groups are selected. A group with a higher availability value may have longer on-intervals than a group with lower availability values for power delivery. A group with a lower availability value may have longer on-intervals than a group with higher availability values for charging.

Further, there may be a first set of groups where at least one member of each group is selected from the battery modules with the highest availability values. There may be another set of groups, where at least one member of each group is selected from the battery modules with the lowest availability values. There must be at least one randomly selected battery module in each group. The random grouping may be repeated before at least one of each interval, each half-wave, each period or multiple periods of an output voltage or charge voltage.

In an embodiment, a battery module is selected, by randomly checking the availability values from all battery modules in a string. If a battery module is found, which has a availability value above the mean value of the availability values of all battery modules in the string, then this battery module is selected for the longest power delivery interval. The further battery modules are selected randomly from the remaining modules. For charging, a battery module is selected, which has a availability value below the mean value of the availability values of all battery modules. The random checking may be repeated before at least one of each interval, each half-wave, each period or multiple periods of an output voltage or charge voltage.

In an embodiment, battery modules are selected randomly, with an additional weighting by a availability value. A availability value for each battery module may be multiplied with an individual random number in the same range, e.g. [0..1] (from 0 to 1). The Largest number may be selected for charging and the lowest number may be selected for discharging. This leads to a better load distribution between battery modules. The random selection may be repeated before at least one of each interval each half-wave, each period or multiple periods of an output voltage or charge voltage.

If, according to prior art, for balancing battery modules are only selected by availability value, then the batteries with highest availability value may be discharged/charged with high power rating for a longer period which may lead to local overheating. A further imbalance may occur due to errors in SoC estimation which may be at least +-5%. Further, as the same battery module will be used periodically with the same timing, the EMI pattern may develop an unwanted high peak. Such overstressing e.g. overheating of battery modules and excessive electromagnetic radiation may be avoided by a stochastic distribution of battery modules.

### Description of Drawings

In the following the invention will be described by way of example, without limitation of the general inventive concept, on examples of embodiment with reference to the drawings.
Fig. 1 shows a circuit diagram of an embodiment.
Fig. 2 shows a block diagram of a battery storage system.
Fig. 3 shows details of a battery module.

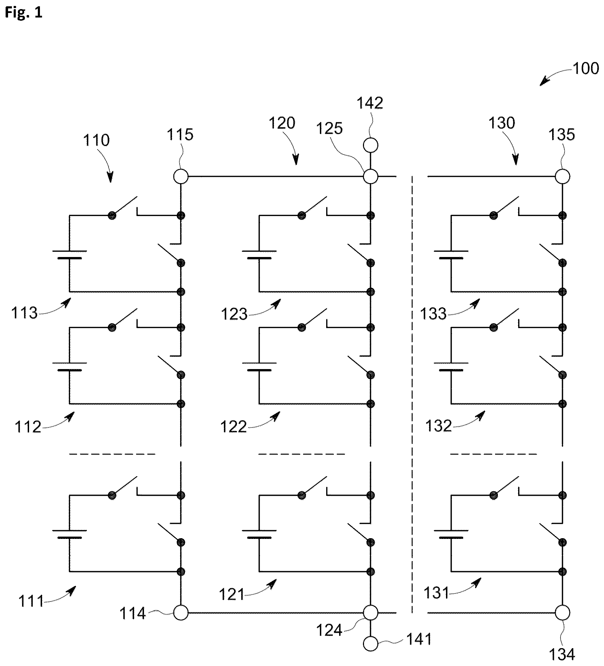

Fig. 1 shows a circuit diagram of an embodiment of a battery storage system 100. The battery storage system 100 includes a plurality of strings of battery modules. This figure shows three strings 110, 120, 130 which are connected in parallel. There may also be two strings or any higher number of strings.

Each string of battery modules 110, 120, 130 includes a plurality of battery modules which may be connected in series. Herein, exemplary three battery modules are shown. Instead, there may be at least two battery modules or any higher number of battery modules. Each battery module may include at least a battery, one switch for disconnecting the battery and another switch for bridging the battery module. In this figure, a first string 110 includes three battery modules 111, 112, 113 which are connected in series. The first string may have a first connector 114 connected to the first battery module 111 and a second connector 115 connected to the last battery module of the string which is the third battery module 113 in this embodiment. The same applies to the second string 120 including battery modules 121, 122 and 123 which are connected to a first connector of second string 124 and a second connector of second string 125. The third string 130 includes battery modules 131, 132 and 133 which are connected to first connector of third string 134 and second connector of third string 135.

The first connectors 114, 124 and 134 may be connected together to a common first battery storage system connector. Further, the second connectors 115, 125 and 135 may also be connected together to a second battery system connector 142. In this embodiment, the battery storage system 100 may deliver power at the first battery system connector 141 and the second system battery connector 142. The battery storage system 100 may also be charged through these connectors.

Each string may be configured to provide different output voltages by connecting any number of batteries in series. If no battery is connected, then the output voltage may be zero. There may also be a high impedance, if at least one battery module is in an open state.

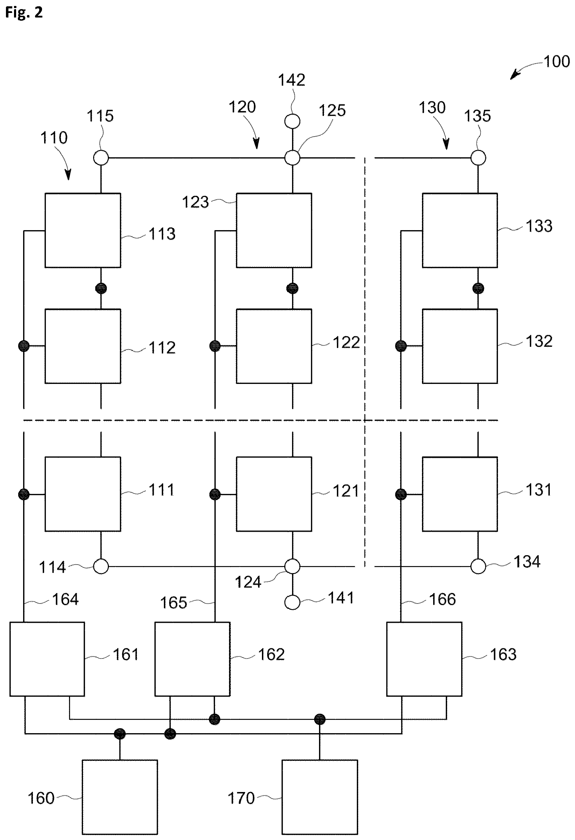

Fig. 2 shows a block diagram of a battery storage system 100. The individual battery modules are shown as blocks. Further, control means are shown. A first string controller 161 may control via a control bus 164 the battery modules of the first string 111, 112 and 113. As the individual battery modules of a string may be on varying potentials depending on the switching states of the battery modules, there must be an isolation to the bus. This may be done by isolated bus couplers in the battery modules. Alternatively, individual isolated bus lines may be provided between a string controller and the battery modules of a string.

String 2 is controlled by second string controller 162 via second control bus 165 and string 3 is controlled by third string controller 163 via third control bus 166.

The string controllers may be controlled by a master controller 160 via a master control bus 167. Alternatively, there may be a single controller including the functions of master controller and string controllers. A plurality of individual string controllers which may operate independently, and which further may operate autonomously may increase the reliability of the system. In the case, the master controller would fail, the individual string controllers may revert to a previous configuration or to a standard failsafe configuration. The module controllers and/or the master controller form a controller structure. Any string controller and/or any master controller may include a random number generator configured for generating at least one random number. Based on the at least one random number (or random value) an of the methods disclosed herein may be performed.

There may also be a backup master controller 170 which may communicate with the string controllers via a backup master control bus 177. There may also be backup string controllers and/or a backup control bus within the strings.

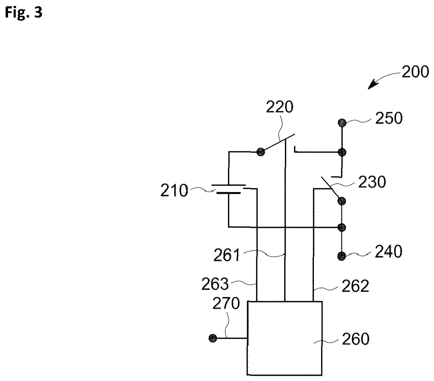

Fig. 3 shows details of a battery module 200. Each of the previously shown individual battery modules 111-113, 121-123 and 131-133 may have the same or a similar structure. A battery module 200 may include a battery 210. Such a battery may be any source of electrical DC power. Normally, such a battery may be based on a rechargeable technology, like LiPo, LFP, Li-Ion, NiCd, NiMH. It may also include a fuel cell. The battery module 200 may further include a series switch 220 which may be connected in series to the battery, and which may be configured to connect or to disconnect the battery for providing a disconnected state in which the battery is isolated from other batteries. If the series switch 220 is closed, the battery is in a connected state. The battery 210 together with the series switch 220 may be connected between a first module connector 240 and a second module connector 250. In the embodiment shown, the positive pole (+) of a battery is connected to the second module connector 250 whereas the negative (-) pole of a battery is connected to the first module connector 240. There may further be a parallel switch 230 which may also be connected between the first module connector 240 and the second module connector 250. The parallel switch 230 may be configured to provide a short-circuit between the first module connector 240 and the second module connector 250 in a closed state which is called the bypass state herein. When the parallel switch 230 is closed, the series switch 220 may be opened to avoid a short-circuit of the battery. The battery module 200 may further be configured to provide an open state, where the series switch 220 and the parallel switch 230 are open. In such a state, no current can flow through the battery module and therefore through the string in which the battery module is integrated. This means, that the string is disconnected from the other strings in the battery storage system.

Summarizing, there may be three different states of the battery storage system 100, a connected state, a bypass state and an open state.

For controlling the switches, a module controller 260 may be provided. This module controller 260 may control the series switch 220 via a series switch control line 261. It may further control the parallel switch 230 by a parallel switch control line 262. There may also be a battery signal line or a bus 263 for receiving battery parameters like battery temperature, battery voltage, battery current or state of charge or state of health. Based on these parameters, the module controller may control the switches.

The module controller 260 may be connected by a bus connector 270 to a control bus of a string controller. The module controller may receive commands for controlling the switch from the string controller and may forward status information of switches and/or battery to the string controller.

### List of reference numerals

- 100: battery storage system
- 110: first string
- 111- 113: battery modules of first string
- 114: first connector of first string
- 115: second connector of first string
- 118: first diode
- 119: first inductor
- 120: second string
- 121 - 123: battery modules of second string
- 124: first connector of second string
- 125: second connector of second string
- 128: second diode
- 129: second inductor
- 130: third string
- 131 - 133: battery modules of third string
- 134: first connector of third string
- 135: second connector of third string
- 138: third diode
- 139: third inductor
- 141: first battery system connector
- 142: second battery system connector
- 150: communication bus
- 160: master controller
- 161: first string controller
- 162: second string controller
- 163: third string controller
- 164: first control bus
- 165: second control bus
- 166: third control bus
- 167: master control bus
- 170: backup master controller
- 177: backup master control bus
- 190: load or power source
- 200: battery module
- 210: battery
- 220: series switch
- 230: parallel switch
- 240: first module connector
- 250: second module connector
- 260: module controller
- 261: series switch control line
- 262: parallel switch control line
- 263: battery signal line
- 270: bus connector

## Claims

1. A battery storage system (100) comprising at least one string (110, 120, 130), the at least one string (110, 120, 130) comprising a plurality of battery modules (200) which are connected in series, and
each battery module (200) includes at least:
- a battery (210),
- at least one series switch (220) configured to connect or disconnect the battery (200) between the first battery system connector (141) and the second battery system connector (142), and
- at least one parallel switch (230) between the first battery system connector (141) and the second battery system connector (142) configured to bypass the battery module (200) when closed,
wherein each battery module (200) can be configured for:
- a connected state where the at least one series switch (220) is open and the at least one parallel switch (230) is closed,
- a bypass state, where the at least one series switch (220) is open and the at least one parallel switch (230) is closed,
**characterized in, that**
the battery storage system (100) is configured for selection within each string (110, 120, 130) different combinations of battery modules (200) for a connected state while the remaining battery modules (200) are in a bypass state,
wherein the selection is based on a selection value based on an availability value of the at least one of the battery modules (200) and a random value.

2. The battery storage system (100) according to the previous claim, **characterized in, that**
the battery storage system (100) is configured for selection different combinations of strings (1 10, 120, 130) for a connected state while in the remaining strings (110, 120, 130) at least one battery module (200) is in an open state where the at least one series switch (220) and the at least one parallel switch (230) are open,
wherein the selection is based on a selection value based on an availability value of the at least one of the strings (1 10, 120, 130) and a random value.

3. The battery storage system (100) according to claim 1,
**characterized in, that**
the battery storage system (100) is configured for a PWM (Pulse Width Modulation) of a selection of different combinations of strings (110, 120, 130) for a connected state while in the remaining strings (110, 120, 130) at least one battery module (200) is in an open state where the at least one series switch (220) and the at least one parallel switch (230) are open, wherein the selection is based on a selection value based on an availability value of the at least one of the strings (1 10, 120, 130) and a random value.

4. The battery storage system (100) according to any of the previous claims, **characterized in, that**
the selection is based on the availability value combined with the random value e.g., by adding, subtracting, multiplying or dividing.

5. The battery storage system (100) according to any of the previous claims, **characterized in, that**
the selection is based on a random selection from a group having the highest availability values and/or highest selection values.

6. The battery storage system (100) according to any of the previous claims, **characterized in, that**
the selection value is calculated in predetermined or random time intervals.

7. The battery storage system (100) according to any of the previous claims, **characterized in, that**
the availability values are updated in time intervals given by the random value.

8. The battery storage system (100) according to any of the previous claims, **characterized in, that**
the availability value of the at least one of the battery modules (200) and/or the random value are updated in time intervals larger than one or multiple intervals or periods of a string voltage.

9. The battery storage system (100) according to any of the previous claims, **characterized in, that**
a load and/or power source is connected between the first battery system connector (141) and the second battery system connector (142).

10. The battery storage system (100) according to any of the previous claims, **characterized in, that**
that at least one battery module (200) includes at least one further switch wherein the switches of the at least one battery module may be further configured for at least one of parallel switching of battery cells or battery modules or polarity reversal of battery cells or battery modules.

11. A method of operating a battery storage system (100) comprising at least one string (110) of battery modules (200) wherein at least two of the battery modules (200) are connected in series within each string, the method includes the steps of
- calculating a selection value of at least one of the battery modules (200) based on an availability value of the at least one battery module (200),
- selecting based on the selection value and a random value within the at least one string (110) over multiple periods of time different combinations of battery modules (200) for a connected state with the batteries (210) of the battery modules being in a series connection while the remaining battery modules (200) are in a bypass state with disconnected batteries (210).

12. The method according to the previous claim,
wherein the step of selecting different combinations of battery modules (200) for a connected state includes a pulse width modulation (PWM).

13. The method according to the previous two claims,
the battery storage system (100) comprising a plurality of strings (110, 120, 130) of battery modules (200) wherein the strings are connected in parallel,
the method includes the further steps of
- calculating a string selection value of at least one of strings (110, 120, 130) based on an availability value of at least one string (110, 120, 130),
- selecting based on the string selection value and a random value over multiple periods of time different combinations of strings (110, 120, 130) for a connected state with the strings being in a parallel connection while the remaining strings (110, 120, 130) are disconnected in an open state.

14. The method according to the previous claim,
wherein the step of selecting different combinations of strings (110, 120, 130) for a connected state includes a pulse width modulation (PWM).

15. The battery storage system (100) or a method according to any of the previous claims,
**characterized in, that**
the availability value of a battery module (200) or of a string (110, 1201, 130) includes at least one of a state of charge, a maximum current capacity, a voltage, a temperature, a state of health, a depth of discharge value or a combination thereof.
